# EUROPÄISCHE PATENTSCHRIFT

(11) **EP 3 983 699 B1**
(45) Veröffentlichungstag und Bekanntmachung des Hinweises auf die Patenterteilung: **22.05.2024**
(21) Anmeldenummer: 20733406.1
(22) Anmeldetag: 16.06.2020
(51) Int. Cl.: F16G 13/16

(54) **LEITUNGSFÜHRUNGSEINRICHTUNG**
LINE-GUIDING DEVICE
DISPOSITIF DE GUIDAGE DE LIGNES

(30) Priorität: 17.06.2019 DE 102019116367
(43) Veröffentlichungstag der Anmeldung: 20.04.2022
(73) Patentinhaber: Tsubaki Kabelschlepp GmbH, 57482 Wenden-Gerlingen (DE)
(72) Erfinder: KEMPER, Uwe, 57223 Kreuztal (DE); WENDIG, Thomas, 57581 Katzwinkel/Elkhausen (DE)
(74) Vertreter: Neumann, Ditmar
(86) Internationale Anmeldenummer: PCT/EP2020/066571
(87) Internationale Veröffentlichungsnummer: WO 2020/254295

(56) Entgegenhaltungen:
- EP-A1- 2 010 800
- EP-A1- 2 549 144
- DE-B- 1 250 711

## Beschreibung

Die vorliegende Erfindung betrifft eine Leitungsführungseinrichtung, insbesondere zum Führen von Kabeln und Schläuchen. Eine derartige Leitungsführungseinrichtung kann auch als eine Energieführungskette bezeichnet werden.

Aus dem Stand der Technik sind verschiedenste Leitungsführungseinrichtungen bekannt. Mit diesen können Leitungen wie Kabel oder Schläuche zwischen zwei relativ zueinander beweglichen Bauteilen geführt werden, ohne dass die Leitungen durch die Bewegung der Bauteile beschädigt würden.

Eine gattungsgemäße Leitungsführungseinrichtung ist aus der EP 2 010 800 bekannt. Die darin beschriebene Leitungsführungseinrichtung weist eine Anzahl gelenkig miteinander verbundener Kettenglieder mit jeweils zwei einander gegenüberliegenden Seitenlaschen auf. Die Leitungsführungseinrichtung ist so verfahrbar, dass sie eine Schlaufe aus einem Untertrum, einem Obertrum und einem diese verbindenden Umlenkbereich bildet. Jeweils zwei einander benachbarte Seitenlaschen sind um eine gemeinsame Schwenkachse gegeneinander verschwenkbar, wobei der Abstand der Schwenkachse zu der dem Schlaufeninneren zugewandten Schmalseite geringer als zu dem Schlaufenäußeren zugewandten Schmalseite ist. Insoweit sind die Schwenkachsen außermittig angeordnet.

Bei der Leitungsführungseinrichtung gemäß der EP 2 010 800 bilden die zur Innenseite der Schlaufe weisenden Schmalseiten der Seitenlaschen in gestreckter Konfiguration eine durchgehende Lauffläche, auf welcher das gegenüberliegende Trum gleiten oder, sofern bei der Energieführungskette zumindest einige der Seitenlaschen des gegenüberliegenden Trums mit Laufrollen versehen sind, abrollen kann. "Durchgehend" soll in dem Zusammenhang bedeuten, dass der Spalt in der Lauffläche beim Übergang von einer Seitenlasche zur nächsten auf das unvermeidliche Spiel beschränkt ist. Die durchgehende Lauffläche soll ein weitgehend energieverlustfreies und geräuscharmes Abrollen ermöglichen.

Gemäß der Lehre der EP 2 010 800 sollen also Energieverlust und Geräuschentwicklung aufgrund von Unterbrechungen der Laufflächen dadurch reduziert werden, dass Spalte zwischen den Seitenlaschen möglichst klein gehalten werden. Da aber aus technischen Gründen eine Minimalspaltbreite nicht unterschritten werden kann, ist bei Erreichen dieser Minimalspaltbreite keine weitere Verbesserung gemäß der Lehre der EP 2 010 800 mehr möglich. Auch erfordert es einen erheblichen konstruktiven Aufwand, wenn als Spaltbreite die Minimalspaltbreite verwendet wird. Weiterhin kann es im Betrieb einer Leitungsführungseinrichtung mit Minimalspaltbreite zu Problemen kommen, weil kein signifikantes Spiel zwischen den einzelnen Kettengliedern besteht.

Eine weitere Leitungsführungseinrichtung ist beispielsweise aus der EP 2 549 144 bekannt. Bei dieser ist allerdings der Abstand der Schwenkachse zu der dem Schlaufeninneren zugewandten Schmalseite nicht geringer als zu dem Schlaufenäußeren zugewandten Schmalseite.

Ausgehend von den aus dem Stand der Technik bekannten Nach-teilen liegt der vorliegenden Erfindung die Aufgabe zugrunde, eine gattungsgemäße Leitungsführungseinrichtung dahin weiterzuentwickeln, dass Energieverlust und Geräuschentwicklung aufgrund von Spalten in der Lauffläche weiter reduziert werden, insbesondere ohne die Spaltbreite auf eine Minimalspaltbreite reduzieren zu müssen.

Diese Aufgabe wird mit den Merkmalen der unabhängigen Ansprüche gelöst. Abhängige Ansprüche sind auf vorteilhafte Weiterbildungen gerichtet. Es ist darauf hinzuweisen, dass die in den abhängigen Ansprüchen einzeln aufgeführten Merkmale in beliebiger, technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Erfindungsgemäß wird eine Leitungsführungseinrichtung mit einer Vielzahl von gelenkig miteinander verbundenen Gliedern vorgestellt, welche eine Schlaufe aus einem Obertrum, einem Umlenkbereich und einem Untertrum bilden. Benachbarte Glieder sind um eine jeweilige Schwenkachse gegeneinander verschwenkbar. Die Schwenkachsen sind zumindest bei einem Teil der Glieder, vorzugsweise bei allen Gliedern, näher an einer Schlaufeninnenseite als an einer Schlaufenaußenseite angeordnet. Die Glieder weisen jeweils zwei einander gegenüberliegende Seitenlaschen auf. Seitenlaschen benachbarter Glieder bilden an der Schlaufeninnenseite wenigstens eine Lauffläche. Durch die Seitenlaschen ist an der Schlaufeninnenseite eine Lauffläche gebildet. Zumindest ein Teil der Glieder weist eine jeweilige aus der Lauffläche herausragende Rolle auf. Das Obertrum und das Untertrum können über die Lauffläche derart aneinander anliegen, dass das Obertrum und das Untertrum mittels der Rollen relativ zueinander verfahrbar sind. Die Lauffläche ist an zumindest einem Teil der Übergänge zwischen benachbarten Gliedern derart unterbrochen, dass ein durch ein erstes der beiden benachbarten Glieder gebildeter Teil der Lauffläche eine Ausnehmung aufweist, und dass ein durch ein zweites der beiden benachbarten Glieder gebildeter Teil der Lauffläche einen Zapfen aufweist, der unter Bildung eines Spalts in die Ausnehmung eingreift.

Mit der beschriebene Leitungsführungseinrichtung können Leitungen wie Kabel oder Schläuche zwischen zwei relativ zueinander beweglichen Bauteilen geführt werden, ohne dass die Leitungen durch die Bewegung der Bauteile beschädigt würden.

Die Leitungsführungseinrichtung weist eine Vielzahl gelenkig miteinander verbundener Glieder auf. Durch Begrenzung des Verschwenkwinkels, mit dem benachbarte Glieder gegeneinander verschwenkt werden können, können die Leitungen davor geschützt werden, mit einem zu geringen Krümmungsradius gekrümmt und insoweit beschädigt zu werden. Die Glieder sind vorzugsweise in einer Reihe aufgereiht und bilden so die Leitungsführungseinrichtung. Die Glieder sind vorzugsweise aus einem Kunststoff gebildet. Das bezieht sich auf alle Elemente der Glieder.

Die Glieder bilden eine Schlaufe aus einem Obertrum und einem Untertrum, zwischen denen ein Umlenkbereich angeordnet ist. Im Bereich des Obertrums und des Untertrums sind die Glieder vorzugsweise in einer geraden Linie angeordnet, so dass insoweit von einer gestreckten Konfiguration gesprochen werden kann. Im Umlenkbereich sind die Glieder gegeneinander verschwenkt, so dass insoweit von einer gekrümmten Konfiguration gesprochen werden kann. Ist die Leitungsführungseinrichtung zwischen zwei relativ zueinander beweglichen Bauteilen angeordnet, können die beiden Bauteile unter Verschiebung des Umlenkbereichs relativ zueinander verschoben werden.

Entlang der Reihe der Glieder ist eine Ausbreitungsrichtung der Leitungsführungseinrichtung definiert. Im Bereich von Obertrum und Untertrum weist die Ausbreitungsrichtung an allen Gliedern in die gleiche Richtung. Die Ausbreitungsrichtung im Bereich des Obertrums und die Ausbreitungsrichtung im Bereich des Untertrums sind einander gegenläufig. Im Bereich des Umlenkbereichs ändert sich die Ausbreitungsrichtung von Glied zu Glied.

Benachbarte Glieder sind um eine jeweilige Schwenkachse gegeneinander verschwenkbar, welche zumindest bei einem Teil der Glieder näher am Innern der Schlaufe als am Äußeren der Schlaufe angeordnet ist. Insoweit sind die Schwenkachsen außermittig angeordnet. Vorzugsweise sind die Schwenkachsen bei allen Übergängen zwischen zwei benachbarten Gliedern näher am Innern der Schlaufe als am Äußeren der Schlaufe angeordnet.

Die Glieder weisen jeweils zwei einander gegenüberliegende Seitenlaschen auf. Durch die Seitenlaschen der Glieder sind somit zwei einander gegenüberliegende Stränge von Seitenlaschen gebildet. Vorzugsweise sind die Seitenlaschen über Querstege miteinander verbunden. Durch Seitenlaschen benachbarter Glieder ist auf deren zum Innern der Schlaufe gerichteten Seite, der Schlaufeninnenseite, wenigstens eine Lauffläche gebildet. Vorzugsweise ist durch die Seitenlaschen der beiden Stränge jeweils eine Lauffläche gebildet. Jeder der beiden Stränge weist also eine jeweilige Lauffläche auf. Die nachfolgende Beschreibung gilt für beide Laufflächen gleichermaßen. Es ist allerdings auch möglich, dass nur einer der beiden Stränge der Seitenlaschen eine wie beschrieben ausgebildete Lauffläche aufweist. Mittels der Lauffläche können das Obertrum und das Untertrum aneinander anliegen. Die Lauffläche hat vorzugsweise eine Breite im Bereich von 5 und 200 mm, insbesondere im Bereich von 10 bis 100 mm quer zur Ausbreitungsrichtung der Leitungsführungseinrichtung. Damit das Obertrum und das Untertrum besonders leicht und ruckfrei relativ zueinander verfahren werden können, weisen einige der Glieder Rollen auf, die aus der Lauffläche herausragen. Die Rollen des Obertrums können auf der Lauffläche des Untertrums rollen; die Rollen des Untertrums können auf der Lauffläche des Obertrums rollen. Die Rollen stehen mit der Lauffläche im Bereich des Obertrums und des Untertrums in Kontakt, nicht aber im Bereich des Umlenkbereichs. Im Bereich des Obertrums und im Bereich des Untertrums liegt die Leitungsführungseinrichtung in gestreckter Konfiguration vor. Die Rollen gelangen also mit der Lauffläche in der gestreckten Konfiguration in Kontakt. Die folgende Beschreibung des Rollens der Rolle auf der Lauffläche bezieht sich entsprechend nur auf die gestreckte Konfiguration.

Die Rollen können auf der Lauffläche besonders energieverlustfrei und geräuscharm rollen. Dabei ist es nicht erforderlich, Spalte zwischen benachbarten Gliedern besonders schmal zu gestalten. Stattdessen weist die Lauffläche an zumindest einem Teil der Übergänge zwischen zwei benachbarten Gliedern Spalte auf, die zwischen einer Ausnehmung und einem Zapfen gebildet sind. Die Ausnehmung ist in dem Teil der Lauffläche des ersten an dem Übergang beteiligten Gliedes gebildet und der Zapfen in der Lauffläche des zweiten an dem Übergang beteiligten Gliedes. Sowohl die Ausnehmung als auch der Zapfen sind als Teil der zweidimensionalen Lauffläche definiert. Der Zapfen kann in die Ausnehmung eingreifen, wobei zwischen der Ausnehmung und dem Zapfen ein Spalt gebildet wird. Dieser Spalt ist ebenfalls zweidimensional in der Ebene der Lauffläche definiert. Der Spalt erstreckt sich zwischen dem Rand der Ausnehmung und dem Rand des Zapfens. Dieser Spalt kann insbesondere erheblich größer ausgebildet sein als technisch erforderlich. Dadurch werden die oben beschriebenen Nachteile umgangen, die sich bei einem Spalt mit Minimalspaltbreite ergeben.

Die Reduzierung von Energieverlust und Geräuschentwicklung beim Abrollen der Rollen auf der Lauffläche kann deshalb auch ohne Minimierung der Spaltbreite reduziert werden, weil die Spalte zwischen den Ausnehmungen und den Zapfen die Bewegung der Rollen nicht signifikant beeinflussen. Anders ist dies bei einem Spalt, der quer zur Bewegungsrichtung einer Rolle ausgebildet ist. Bei einem solchen Spalt dringt die Rollen beim Überschreiten des Spalts in diesen ein. Der tiefste Punkt der Rolle bewegt sich in dem Fall in den Spalt hinein und fällt insoweit unter die Ebene der Lauffläche. Durch Ausgestaltung der Übergänge mit Ausnehmung und Zapfen kann dies verhindert werden.

Vorzugsweise ist die Leitungsführungseinrichtung derart ausgebildet, dass die Rollen beim Übergang zwischen den benachbarten Gliedern zu jedem Zeitpunkt mit einem Teil der Lauffläche in Kontakt stehen können. Dazu ist es bevorzugt, dass die Rollfläche der Rollen breiter ist als eine Ausdehnung der Ausnehmung quer zur Ausbreitungsrichtung der Leitungsführungseinrichtung an dem Punkt, an dem die Rolle bei einer Bewegung von einem ersten Glied zu einem zweiten Glied zuerst auf den Zapfen des zweiten Glieds trifft. Die Breite der Rollfläche ist quer zur Ausbreitungsrichtung der Leitungsführungseinrichtung definiert. Bewegt sich die Rolle in dem Fall über einen Übergang von einem ersten Glied zu einem zweiten Glied, so steht die entsprechende Rollfläche zu jedem Zeitpunkt mit dem durch das erste Glied gebildeten Teil der Lauffläche und/oder mit dem durch das zweite Glied gebildeten Teil der Lauffläche in Kontakt. Zunächst steht die gesamte Rollfläche mit dem durch das erste Glied gebildeten Teil der Lauffläche in Kontakt. Erreicht die Rolle den Bereich der Ausnehmung, so verliert die Rollfläche nur in deren Mitte den Kontakt zur Lauffläche. In den Randbereichen der Rollfläche bleibt dieser Kontakt aber bestehen. Anschließend gelangt der mittlere Bereich der Rollfläche mit dem durch das zweite Glied gebildeten Teil der Lauffläche in Kontakt. In dem Moment steht die Rollfläche über ihre Randbereichen mit dem durch das erste Glied gebildeten Teil der Lauffläche und zugleich über ihren mittleren Bereich mit dem durch das zweite Glied gebildeten Teil der Lauffläche in Kontakt. Erst anschließend verliert die Rollfläche den Kontakt zu dem durch das erste Glied gebildeten Teil der Lauffläche. Zu jedem Zeitpunkt steht also wenigstens ein Teil der Rollfläche mit einem Teil der Lauffläche in Kontakt. Das gilt auch, wenn der Spalt erheblich größer als technisch notwendig ist. Daher ist eine Minimierung der Spaltbreite nicht erforderlich.

Es ist allerdings nicht erforderlich, dass die Rollen beim Übergang zwischen zwei benachbarten Gliedern zu jedem Zeitpunkt mit einem Teil der Lauffläche in Kontakt stehen können. Eine Reduktion der Geräuschentwicklung und des damit einhergehenden Energieverlust kann bereits dann erzielt werden, wenn die Rollen beim Übergang zwischen zwei benachbarten Gliedern nur für eine kurze Zeit mit keinem Teil der Lauffläche in Kontakt stehen. Durch die Gestaltung des Übergangs zwischen benachbarten Gliedern mit Ausnehmung und Zapfen kann die von einer Rolle ohne Kontakt zur Lauffläche zu überbrückende Strecke erheblich kürzer als die Spaltbreite sein. Somit kann eine signifikante Reduktion der Geräuschentwicklung auch ohne Minimierung der Spaltbreite erreicht werden.

Gemäß einer bevorzugten Ausführungsform der Leitungsführungseinrichtung weisen die Rollen eine jeweilige Rollfläche auf, welche quer zur Ausbreitungsrichtung der Leitungsführungseinrichtung schmaler als die Ausnehmungen ist.

Die Breite der Ausnehmung ist quer zur Ausbreitungsrichtung der Leitungsführungseinrichtung definiert. Sofern die Ausnehmung in dieser Richtung eine veränderliche Ausdehnung hat, ist unter der Breite die maximale Ausdehnung zu verstehen. In der vorliegenden Ausführungsform ist die Rollfläche also schmaler als die Ausnehmung an ihrer breitesten Stelle. Beispielsweise kann die Rollfläche eine Breite von 15 mm und die Ausnehmung eine Breite von 17 mm haben. In dieser Ausführungsform ist es bevorzugt, dass der Spalt zwischen Ausnehmung und Zapfen zumindest abschnittsweise, vorzugsweise an jeder Stelle, schräg zur Ausbreitungsrichtung der Leitungsführungseinrichtung verläuft. Beispielsweise kann der Spalt einer U- oder V-Form ähneln und spiegelsymmetrisch zur Ausbreitungsrichtung der Leitungsführungseinrichtung ausgebildet sein. Durch einen derart schräg angeordneten Spalt kann die Rolle den Spalt ohne Eintauchen überfahren, auch wenn die Ausnehmung breiter als die Rollfläche ist.

Gemäß einer weiteren bevorzugten Ausführungsform der Leitungsführungseinrichtung weisen die Ausnehmungen eine jeweilige Länge entlang der Ausbreitungsrichtung der Leitungsführungseinrichtung auf, die größer als eine Spaltbreite des mit der jeweiligen Ausnehmung gebildeten Spalts ist.

Insbesondere in dieser Ausführungsform können die Rollen beim Übergang zwischen zwei benachbarten Gliedern zu jedem Zeitpunkt mit einem Teil der Lauffläche in Kontakt stehen.

Gemäß einer weiteren bevorzugten Ausführungsform der Leitungsführungseinrichtung sind die Spalte zwischen Rändern der Lauffläche quer zur Ausbreitungsrichtung der Leitungsführungseinrichtung durchgehend ausgebildet.

Die hier betrachteten Ränder sind die äußersten Punkte der Lauffläche bei Betrachtung derselben senkrecht zur Ausbreitungsrichtung der Leitungsführungseinrichtung. In dieser Ausführungsform erstrecken sich die Spalte also so über die gesamte Lauffläche, dass die Lauffläche vollständig unterbrochen ist. Dass die Spalte sich quer zur Ausbreitungsrichtung der Leitungsführungseinrichtung über die gesamte Lauffläche erstrecken, bedeutet allerdings nicht, dass die Spalte ausschließlich quer zur Ausbreitungsrichtung der Leitungsführungseinrichtung verlaufen. Die Ausgestaltung der Spalte zwischen der jeweiligen Ausnehmung und dem jeweiligen Zapfen bedingt vielmehr, dass die Spalte jedenfalls teilweise auch in oder entgegen der Ausbreitungsrichtung der Leitungsführungseinrichtung verlaufen.

Gemäß einer weiteren bevorzugten Ausführungsform der Leitungsführungseinrichtung weisen die Spalte eine jeweilige Spaltbreite auf, die zwischen 2 und 20 % einer Ausdehnung der Lauffläche quer zur Ausbreitungsrichtung der Leitungsführungseinrichtung entspricht.

Die Spaltbreite ist der kürzeste Abstand zwischen dem Rand der Ausnehmung und dem Rand des zugehörigen Zapfens. Die Spaltbreite kann mithin an verschiedenen Stellen des Spalts unterschiedlich groß sein. In der vorliegenden Ausführungsform liegt die Spaltbreite an jeder Stelle im Bereich zwischen 2 und 20 % der Ausdehnung der Seitenlaschen quer zur Ausbreitungsrichtung der Leitungsführungseinrichtung. Bevorzugt ist die Spaltbreite eines Spalts konstant. Auch ist es bevorzugt, dass die Spaltbreite bei allen Spalten gleich ist. Bei einer nichtkonstanten Spaltbreite bedeutet dies, dass der Verlauf der Spaltbreite bei allen Spalten vorzugsweise gleich ist, dass also alle Spalte die gleiche Form und Größe haben. Die Spaltbreite liegt vorzugsweise im Bereich zwischen 5 und 20 mm.

Gemäß einer weiteren bevorzugten Ausführungsform der Leitungsführungseinrichtung sind die Zapfen symmetrisch zur Ausbreitungsrichtung der Leitungsführungseinrichtung ausgebildet.

Durch die symmetrische Ausgestaltung der Zapfen kann verhindert werden, dass auf die Rollen Kräfte quer zur Ausbreitungsrichtung der Leitungsführungseinrichtung ausgeübt werden, die zu einem unruhigen Lauf der Rollen führen könnten.

Vorzugsweise sind auch die Ausnehmungen symmetrisch zur Ausbreitungsrichtung der Leitungsführungseinrichtung ausgebildet.

Gemäß einer weiteren bevorzugten Ausführungsform der Leitungsführungseinrichtung sind die Zapfen jeweils zu einer Spitze zulaufend ausgebildet.

Durch spitz zulaufende Zapfen kann verhindert werden, dass die Rollen auf quer zur Laufrichtung der Rollen ausgebildete Kanten treffen, wodurch Geräusche entstehen könnten.

Vorzugsweise sind auch die Ausnehmungen jeweils zu einer Spitze zulaufend ausgebildet.

Nicht alle Übergänge zwischen zwei Gliederung müssen wie beschrieben mit Ausnehmung und Zapfen ausgebildet sein. Je mehr Übergänge so ausgestaltet sind, umso mehr können Energieverlust und Geräuschentwicklung reduziert werden. Eine Reduzierung von Energieverlust und Geräuschentwicklung wird aber bereits mit einzelnen derartig ausgebildeten Übergängen erreicht. Bevorzugt ist die Ausführungsform der Leitungsführungseinrichtung, bei der die Lauffläche zumindest an allen Übergängen zwischen zwei rollenlosen Gliedern durch einen zwischen einem jeweiligen Zapfen und einer jeweiligen Ausnehmung ausgebildeten Spalt unterbrochen.

Durch diese Ausgestaltung kann die Konstruktion vereinfacht werden, weil die Anzahl verschiedener herzustellender Teile klein ist und gleichzeitig bei den aufwendiger herzustellenden Gliedern mit Rolle auf die Ausbildung von Zapfen und Ausnehmung verzichtet werden kann. Bevorzugt ist die Lauffläche bei Gliedern mit Rolle jedenfalls an einem der beiden Übergänge zum jeweils benachbarten Glied durch einen zwischen einem jeweiligen Zapfen und einer jeweiligen Ausnehmung ausgebildeten Spalt unterbrochen.

Die Glieder können auch in sich verschwenkbar ausgebildet sein. So können die beiden Seitenlaschen eines Gliedes beispielsweise jeweils aus einer Außenlasche, einer Innenlasche und einer Mittellasche gebildet sein, wobei die Außenlasche und die Innenlasche einerseits und die Mittellasche andererseits gegeneinander verschwenkbar ausgebildet sind. In dem Fall ist die Lauffläche an dem innerhalb des Gliedes angeordneten Übergang zwischen Außenlasche und Innenlasche einerseits und Mittellasche andererseits durch einen zwischen einem jeweiligen Zapfen und einer jeweiligen Ausnehmung ausgebildeten Spalt unterbrochen. Eine derartige Unterbrechung der Lauffläche innerhalb eines Gliedes kann bei allen Gliedern oder bei einem Teil der Glieder vorgesehen sein.

Gemäß einer weiteren bevorzugten Ausführungsform der Leitungsführungseinrichtung ist bei jedenfalls einem Teil der Glieder die Lauffläche durch eine jeweilige Mehrzahl von Vertiefungen unterbrochen.

Auf der Lauffläche kann sich eine Flüssigkeit ansammeln. Insbesondere kann bei Verwendung der Leitungsführungseinrichtung im Freien Wasser auf die Lauffläche gelangen. Dadurch kann die Haftung der Rollen auf der Lauffläche reduziert werden. Die Rollen können durch die Flüssigkeit auftreiben, sodass die Rollen über die Lauffläche gleiten anstatt zu rollen. Dies kann als hydrodynamisches Gleiten bezeichnet werden. In der vorliegenden Ausführungsform ist die Lauffläche durch Vertiefungen unterbrochen. Die Vertiefungen ermöglichen ein seitliches Entweichen der Flüssigkeit, wodurch die Rollen wieder in Kontakt zur Lauffläche gelangen und wieder rollen können. Die Vertiefungen in der Lauffläche haben insbesondere gegenüber einer profilierten Rolle fertigungstechnische Vorteile, weil die Vertiefungen kostengünstiger und einfacher realisierbar sind als ein vergleichbares Profil auf der Rolle. Vorzugsweise sind die Vertiefungen versetzt zueinander angeordnet. Dadurch kann eine Reduzierung der Geräuschentwicklung beim Rollen der Rollen über die Vertiefungen erreicht werden.

Gemäß einer weiteren bevorzugten Ausführungsform der Leitungsführungseinrichtung sind die Vertiefungen derart paarweise angeordnet, dass jeweils ein Paar der Vertiefungen die Lauffläche zwischen Rändern der Lauffläche quer zur Ausbreitungsrichtung der Leitungsführungseinrichtung durchgehend unterbricht.

Die hier betrachteten Ränder sind die äußersten Punkte der Lauffläche bei Betrachtung derselben senkrecht zur Ausbreitungsrichtung der Leitungsführungseinrichtung. In dieser Ausführungsform erstrecken sich die Vertiefungen also so über die gesamte Lauffläche, dass die Lauffläche vollständig unterbrochen ist. Durch eine derartig durchgehende Unterbrechung kann die Flüssigkeit von der Lauffläche über deren gesamte Breite aufgenommen und in Bereiche außerhalb der Lauffläche abgeführt werden.

Die Ränder der Lauffläche können im Bereich des Spaltes auch durch Ränder des Spalts gebildet sein. So kann ein Paar der Vertiefungen im Zapfen vorgesehen sein, wobei die beiden Vertiefungen gemeinsam den Zapfen zwischen dessen Rändern quer zur Ausbreitungsrichtung der Leitungsführungseinrichtung vollständig unterbrechen.

Gemäß einer weiteren bevorzugten Ausführungsform der Leitungsführungseinrichtung sind die Vertiefungen paarweise angeordnet, wobei sich die Vertiefungen eines Paares in nur einem Berührpunkt berühren.

Es hat sich herausgestellt, dass eine derartige Anordnung die Geräuschentwicklung besonders gut reduziert.

Zwei Vertiefungen eines Paares, die sich in einem Berührpunkt berühren, sollen hier als durchgehend betrachtet werden, so dass diese beiden Vertiefungen zusammen die Lauffläche durchgehend zwischen den Rändern der Lauffläche quer zur Ausbreitungsrichtung unterbrechen können.

Gemäß einer weiteren bevorzugten Ausführungsform der Leitungsführungseinrichtung weist jede der Seitenlaschen eines Gliedes jeweils eine Innenlasche, eine Außenlasche und eine Mittellasche auf, wobei die Vertiefungen nur an den Mittellaschen vorgesehen sind.

Durch diese Ausgestaltung kann die Herstellung der einzelnen Laschen erleichtert werden. Nur bei den Mittellaschen sind die Vertiefungen vorzusehen, während die Außenlaschen und Innenlaschen ohne und insoweit einfacher hergestellt werden können.

Sofern Mittellaschen verschiedener Art vorgesehen sind, ist es bevorzugt, dass nur bei den Mittellaschen einer Art die Vertiefungen vorgesehen sind. Dadurch kann der Herstellungsprozess weiter vereinfacht werden.

Insbesondere durch die Ausgestaltung mit Außenlasche, Innenlasche und Mittellasche können die Glieder in sich verschwenkbar ausgebildet sein.

Gemäß einer weiteren bevorzugten Ausführungsform der Leitungsführungseinrichtung haben die Vertiefungen eine jeweilige Tiefe im Bereich von 1 bis 20 % ihrer Länge entlang der Ausbreitungsrichtung der Leitungsführungseinrichtung. Gemäß einer weiteren bevorzugten Ausführungsform der Leitungsführungseinrichtung haben die Vertiefungen eine jeweilige Tiefe im Bereich von 0,5 bis 2 mm.

Die Tiefe der Vertiefungen ist der Abstand zwischen der jeweils tiefsten Stelle der Vertiefung und der Lauffläche, gemessen senkrecht zur Lauffläche.

Die genannte Tiefe genügt bei den meisten Anwendungen, damit Flüssigkeit ausreichend gut von der Lauffläche abfließen kann.

Gemäß einer weiteren bevorzugten Ausführungsform der Leitungsführungseinrichtung haben die Vertiefungen eine jeweilige Breite quer zur Ausbreitungsrichtung der Leitungsführungseinrichtung im Bereich von 100 bis 300 % ihrer jeweiligen Länge entlang der Ausbreitungsrichtung der Leitungsführungseinrichtung. Gemäß einer weiteren bevorzugten Ausführungsform der Leitungsführungseinrichtung haben die Vertiefungen eine jeweilige Breite quer zur Ausbreitungsrichtung der Leitungsführungseinrichtung im Bereich von 5 bis 20 mm.

Die genannte Breite genügt bei den meisten Anwendungen, damit Flüssigkeit ausreichend gut von der Lauffläche abfließen kann.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Seitenansicht einer erfindungsgemäßen Leitungsführungseinrichtung,
- Fig. 2:: eine schematische Draufsicht auf die Lauffläche an einem Übergang zwischen zwei Gliedern der Leitungsführungseinrichtung aus Fig. 1,
- Fig. 3:: eine Seitenansicht auf die Seitenlaschen einiger in gekrümmter Konfiguration vorliegender Glieder der Leitungsführungseinrichtung aus Fig. 1,
- Fig. 4:: eine Seitenansicht auf die Seitenlaschen aus Fig. 3 in gestreckter Konfiguration,
- Fig. 5:: eine perspektivische Darstellung der Seitenlaschen aus Fig. 3 und 4 in gestreckter Konfiguration,
- Fig. 6:: eine Draufsicht auf die Lauffläche an einem Übergang zwischen zwei benachbarten Gliedern der Leitungsführungseinrichtung aus Fig. 1 mit den Seitenlaschen aus den Fig. 3 bis 5 in gestreckter Konfiguration,
- Fig. 7:: eine erste perspektivische Darstellung der Lauffläche an dem auch in Fig. 6 gezeigten Übergang,
- Fig. 8:: eine zweite perspektivische Darstellung der Lauffläche an dem auch in den Fig. 6 und 7 gezeigten Übergang,
- Fig. 9:: eine erste Seitenansicht auf eine Seitenlasche und eine darauf abrollende Rolle der Leitungsführungseinrichtung aus Fig. 1, und
- Fig. 10:: eine zweite Seitenansicht auf die Seitenlasche aus Fig. 9.

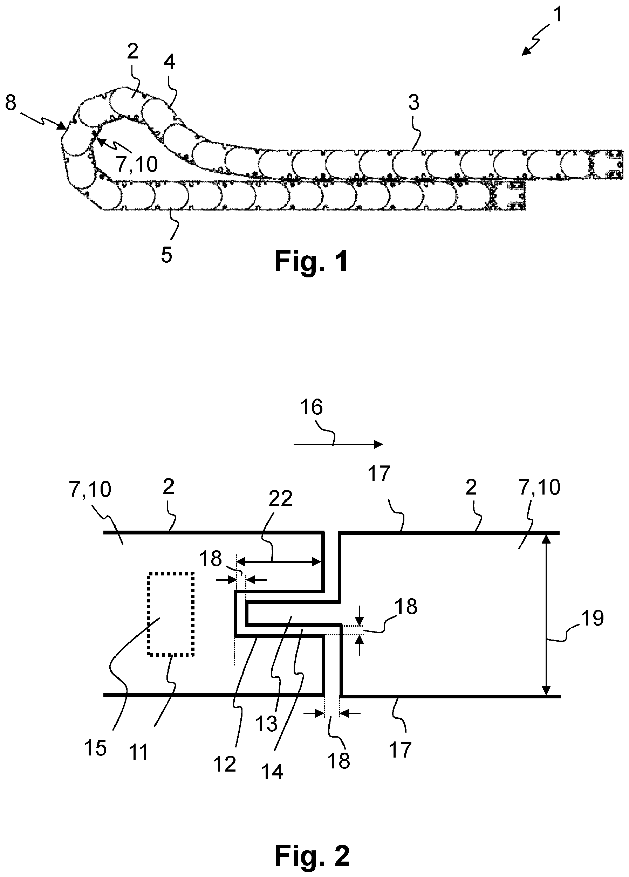

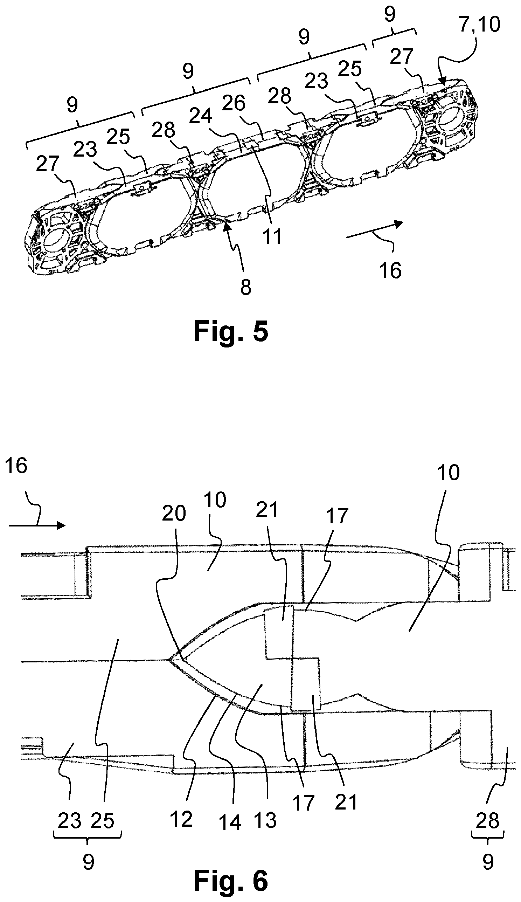

Fig. 1 zeigt eine Seitenansicht einer erfindungsgemäßen Leitungsführungseinrichtung 1 mit einer Vielzahl von gelenkig miteinander verbundenen Gliedern 2. Beispielhaft ist eines der Glieder 2 mit einem Bezugszeichen versehen. Die Leitungsführungseinrichtung 1 bildet eine Schlaufe aus einem Obertrum 3, einem Umlenkbereich 4 und einem Untertrum 5. Eingezeichnet sind eine Schlaufeninnenseite 7 und eine Schlaufenaußenseite 8. An der Schlaufeninnenseite 7 ist eine Lauffläche 10 ausgebildet. Das Obertrum 3 und das Untertrum 4 können über die Lauffläche 10 derart aneinander anliegen, dass das Obertrum 3 und das Untertrum 4 mittels (in Fig. 5 gezeigter) Rollen 11 relativ zueinander verfahrbar sind.

Fig. 2 zeigt eine schematische Draufsicht auf die Lauffläche 10 an einem Übergang zwischen zwei Gliedern 2 der Leitungsführungseinrichtung 1 aus Fig. 1. Zu erkennen ist, dass die Lauffläche 10 an dem gezeigten Übergang zwischen den beiden benachbarten Gliedern 2 derart unterbrochen ist, dass ein durch das hier links dargestellte der beiden benachbarten Glieder 2 gebildeter Teil der Lauffläche 10 eine Ausnehmung 12 aufweist, und dass ein durch das hier rechts dargestellte der beiden benachbarten Glieder 2 gebildeter Teil der Lauffläche 10 einen Zapfen 13 aufweist. Der Zapfen 13 greift unter Bildung eines Spalts 14 in die Ausnehmung 12 ein.

Weiterhin ist eine Rolle 11 durch gepunktete Linien angedeutet. Die Rolle 11 ist nicht Teil der beiden dargestellten Glieder 2, sondern eines Gliedes 2 aus dem anderen Trum der Leitungsführungseinrichtung 1. Sind die beiden dargestellten Glieder 2 beispielsweise Teil des Untertrums 5, so ist die Rolle 11 Teil eines Gliedes 2 des Obertrums 3. Die Rolle 11 kann auf der Lauffläche 10 abrollen. Dazu weist die Rolle 11 eine Rollfläche 15 auf.

Durch die Ausgestaltung der Lauffläche 10 mit der Ausnehmung 12 und dem Zapfen 14 kann die Rolle 11 beim Übergang zwischen den beiden benachbarten Gliedern 2 zu jedem Zeitpunkt mit einem Teil der Lauffläche 10 in Kontakt stehen. Dadurch können Geräuschentwicklung und Energieverlust am Übergang zwischen den beiden benachbarten Gliedern 2 vermieden werden.

Zu erkennen ist an Fig. 2, dass die Rollfläche 15 quer zur Ausbreitungsrichtung 16 der Leitungsführungseinrichtung 1 schmaler als die Ausnehmung 12 ist. Ferner ist zu erkennen, dass die Ausnehmung 12 eine Länge 22 entlang der Ausbreitungsrichtung 16 der Leitungsführungseinrichtung 1 aufweist, die größer als eine Spaltbreite 18 des Spalts 14 ist. Auch ist zu erkennen, dass der Spalt 14 zwischen Rändern 17 der Lauffläche 10 quer zur Ausbreitungsrichtung 16 der Leitungsführungseinrichtung 1 durchgehend ausgebildet ist. Die Spaltbreite 18 liegt zwischen 2 und 20 % einer Ausdehnung 19 der Lauffläche 10 quer zur Ausbreitungsrichtung 16 der Leitungsführungseinrichtung 1.

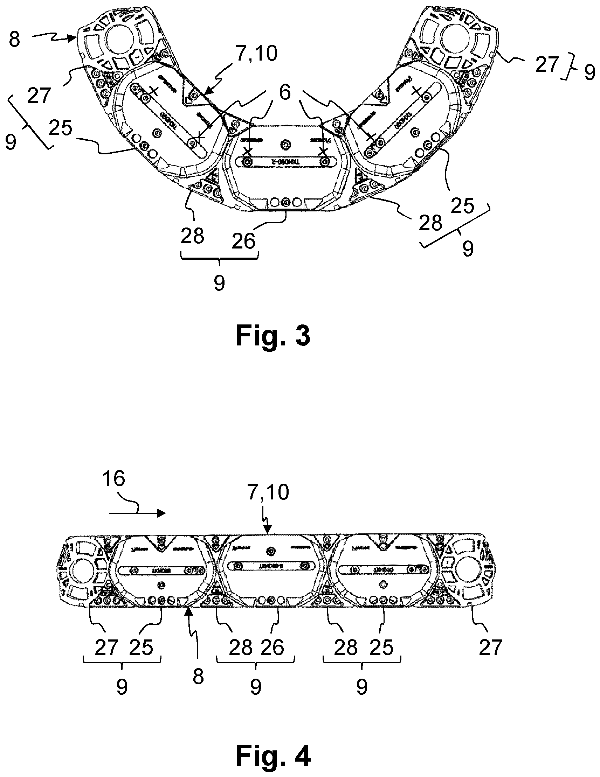

Fig. 3 zeigt eine Seitenansicht auf Seitenlaschen 9 einiger in gekrümmter Stellung vorliegender Glieder 2 der Leitungsführungseinrichtung 1 aus Fig. 1. Jedes der Glieder 2 weist zwei gegenüberliegende Seitenlaschen 9 auf. Von diesen zwei Seitenlaschen 9 ist für mehrere Glieder 2 jeweils eine Seitenlasche 9 in Fig.3 gezeigt. Jede der Seitenlaschen 9 weist jeweils eine (in Fig. 5 zu erkennende) Innenlasche 23, 24, eine Außenlasche 25, 26 und eine Mittellasche 27, 28 auf. Insoweit sind in Fig. 3 dreieinhalb Seitenlaschen 9 gezeigt. Die ganz rechts in Fig. 3 gezeigte Mittellasche 27 ist Teile einer nur unvollständig gezeigten Seitenlasche 9. Die Innenlaschen 23, 24 werden in der Darstellung der Fig. 3 von den gezeigten Außenlaschen 25, 26 verdeckt. Die mittlere der gezeigten vollständigen Seitenlaschen 9 weist eine (in Fig. 5 zu erkennende) Rolle 11 auf, die beiden daneben angeordneten vollständig gezeigten Seitenlaschen 9 sind rollenlos. Die rollenlosen Seitenlaschen 9 weisen jeweils eine erste Innenlasche 23 und eine erste Außenlasche 25 auf. Die Seitenlasche 9 mit der Rolle 11 weist eine zweite Innenlasche 24 und eine zweite Außenlasche 26 auf. Zwischen zwei rollenlosen Seitenlaschen 9 ist jeweils eine erste Mittellasche 27 angeordnet. Rechts und links an die gezeigten Seitenlaschen 9 anschließend ist also vorgesehen, rollenlose Seitenlaschen 9 anzuschließen. Zwischen einer rollenlosen Seitenlasche 9 und einer Seitenlasche 9 mit einer Rolle 11 ist eine zweite Mittellasche 28 angeordnet.

Zu erkennen ist an Fig. 3, dass die einzelnen Paare aus jeweils einer Innenlasche 23, 24 und einer Außenlasche 25, 26 gegen die Mittellaschen 27, 28 um Schwenkachsen 6 verschwenkbar sind. Insoweit sind einerseits die Glieder 2 gelenkig miteinander verbunden. Andererseits sind auch das Paar aus Innenlasche 23, 24 und Außenlasche 25, 26 eines Gliedes 2 gegen die Mittellasche 27, 28 desselben Gliedes 2 verschwenkbar. Insoweit sind die Glieder 2 auch in sich verschwenkbar.

Die Schwenkachsen 6 sind näher an der Schlaufeninnenseite 7 als an der Schlaufenaußenseite 8 angeordnet. Auch eingezeichnet ist, dass an der Schlaufeninnenseite 7 die Lauffläche 10 ausgebildet ist.

Fig. 4 zeigt eine Seitenansicht auf die Seitenlaschen 9 aus Fig. 3 in gestreckter Konfiguration.

Fig. 5 zeigt eine perspektivische Darstellung der Seitenlaschen 9 aus Fig. 3 und 4 in gestreckter Konfiguration. Zu erkennen ist insbesondere, dass eine der gezeigten Seitenlaschen 9 eine aus der Lauffläche 10 herausragende Rolle 11 aufweist.

Fig. 6 zeigt eine Draufsicht auf die Lauffläche 10 an einem Übergang zwischen zwei benachbarten Gliedern 2 der Leitungsführungseinrichtung 1 aus Fig. 1 mit den Seitenlaschen 9 aus den Fig. 3 bis 5 in gestreckter Konfiguration. In Fig. 6 links sind eine erste Innenlasche 23 und eine erste Außenlasche 25 gezeigt. Diese sind Teil der Seitenlasche 9 eines ersten der beiden an dem Übergang beteiligten Glieder 2. Diese Seitenlasche 9 ist insoweit unvollständig gezeigt, als dass die zugehörige Mittellasche nicht gezeigt ist. Rechts ist eine zweite Mittellasche 28 gezeigt. Diese ist Teil der Seitenlasche 9 eines zweiten an dem Übergang beteiligten Gliedes 2. Diese Seitenlasche 9 ist insoweit unvollständig gezeigt, als dass die zugehörige Innenlasche und die zugehörige Außenlasche nicht dargestellt sind.

Die Lauffläche 10 ist an dem gezeigten Übergang zwischen diesen beiden benachbarten Gliedern 2 derart unterbrochen, dass ein durch das linke der beiden gezeigten benachbarten Glieder 2 gebildeter Teil der Lauffläche 10 eine Ausnehmung 12 aufweist, und dass ein durch das rechte der beiden gezeigten benachbarten Glieder 2 gebildeter Teil der Lauffläche 10 einen Zapfen 13 aufweist, der unter Bildung eines Spalts 14 in die Ausnehmung 12 eingreift. Der Zapfen 13 ist symmetrisch zur Ausbreitungsrichtung 16 der Leitungsführungseinrichtung 1 und zu einer Spitze 20 zulaufend ausgebildet.

Bei dem rechten der beiden gezeigten benachbarten Glieder 2 ist die Lauffläche 10 durch eine Mehrzahl von Vertiefungen 21 unterbrochen. Die Vertiefungen 21 sind derart paarweise angeordnet, dass durch jeweils ein Paar der Vertiefungen 21 die Lauffläche 10 zwischen Rändern 17 der Lauffläche 9 quer zur Ausbreitungsrichtung 16 der Leitungsführungseinrichtung 1 durchgehend unterbrochen ist. Die Vertiefungen 21 eines Paares berühren sich in nur einem Berührpunkt 31. Die Ränder 17 der Lauffläche 10 sind hier durch die Ränder des Spalts 14 gebildet. In Fig. 6 ist genau ein solches Paar von Vertiefungen 21 gezeigt.

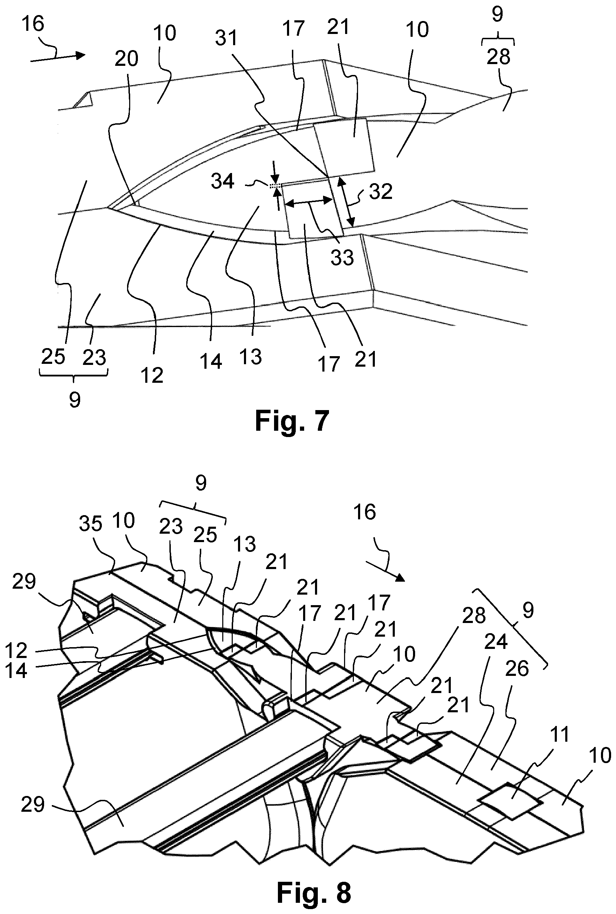

Fig. 7 zeigt eine erste perspektivische Darstellung der Lauffläche 10 an dem auch in Fig. 6 gezeigten Übergang. In Fig. 7 sind eine Breite 32 einer der Vertiefungen 21 quer zur Ausbreitungsrichtung 16 der Leitungsführungseinrichtung 1, eine Länge 33 der Vertiefung entlang der Ausbreitungsrichtung 16 und eine Tiefe 34 der Vertiefung eingezeichnet. Die Tiefe 34 liegt im Bereich von 1 bis 20 % der Länge 33, insbesondere im Bereich von 0,5 bis 2 mm. Die Breite 32 liegt im Bereich von 100 bis 300 % der Länge 33, insbesondere im Bereich von 5 bis 20 mm.

Fig. 8 zeigt eine erste perspektivische Darstellung der Lauffläche 10 an dem auch in den Fig. 6 und 7 gezeigten Übergang. Dabei sind auch zwei Querstege 29 zu erkennen. Die Querstege 29 verbinden die einander gegenüberliegenden Seitenlaschen 9. Die gegenüberliegenden Seitenlaschen 9 bilden zwei einander gegenüberliegende Stränge 35, von denen einer in Fig. 8 zu erkennen ist.

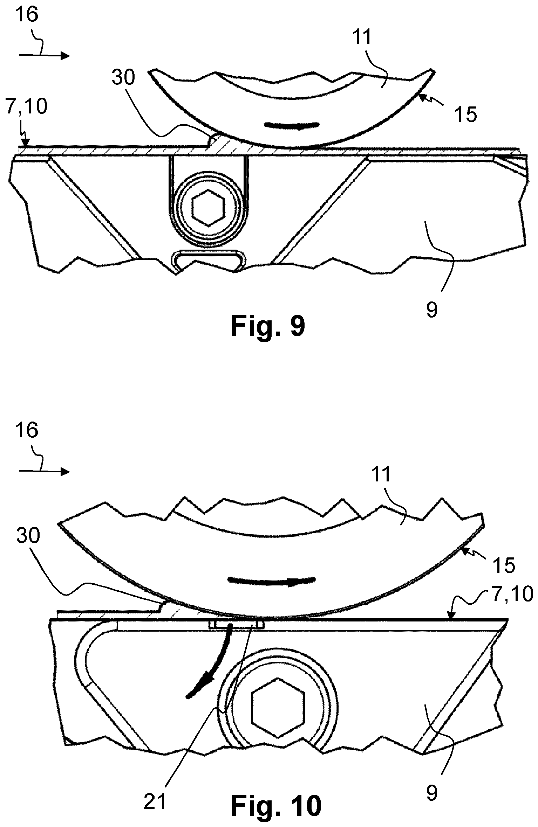

Fig. 9 zeigt eine erste Seitenansicht auf eine Seitenlasche 9 und eine darauf entgegen der Ausbreitungsrichtung 16 abrollende Rolle 11 mit einer Rollfläche 15 der Leitungsführungseinrichtung 1 aus Fig. 1. Zu erkennen ist, dass durch die Bewegung der Rolle 11 eine Flüssigkeitsansammlung 30 auf der Lauffläche 10 an der Schlaufeninnenseite 7 gebildet wird.

Fig. 10 zeigt eine zweite Seitenansicht auf die Seitenlasche 9 aus Fig. 9. Dabei ist in Fig. 10 ein anderer Abschnitt der Seitenlasche 9 gezeigt als in Fig. 9. In dem in Fig. 10 gezeigten Abschnitt ist eine Vertiefung 21 vorhanden. Wie durch einen Pfeil angedeutet, kann die Flüssigkeit der Flüssigkeitsansammlung 30 durch die Vertiefung abfließen. Das kann die Haftung der Rolle 11 auf der Lauffläche 10 verbessern.

### Bezugszeichenliste

- 1: Leitungsführungseinrichtung
- 2: Glied
- 3: Obertrum
- 4: Umlenkbereich
- 5: Untertrum
- 6: Schwenkachse
- 7: Schlaufeninnenseite
- 8: Schlaufenaußenseite
- 9: Seitenlasche
- 10: Lauffläche
- 11: Rolle
- 12: Ausnehmung
- 13: Zapfen
- 14: Spalt
- 15: Rollfläche
- 16: Ausbreitungsrichtung
- 17: Rand
- 18: Spaltbreite
- 19: Ausdehnung
- 20: Spitze
- 21: Vertiefung
- 22: Länge
- 23: erste Innenlasche
- 24: zweite Innenlasche
- 25: erste Außenlasche
- 26: zweite Außenlasche
- 27: erste Mittellasche
- 28: zweite Mittellasche
- 29: Quersteg
- 30: Flüssigkeitsansammlung
- 31: Berührpunkt
- 32: Breite
- 33: Länge
- 34: Tiefe
- 35: Strang

## Patentansprüche

1. Leitungsführungseinrichtung (1) mit einer Vielzahl von gelenkig miteinander verbundenen Gliedern (2), welche eine Schlaufe aus einem Obertrum (3), einem Umlenkbereich (4) und einem Untertrum (5) bilden, wobei benachbarte Glieder (2) um eine jeweilige Schwenkachse (6) gegeneinander verschwenkbar sind, wobei die Schwenkachsen (6) zumindest bei einem Teil der Glieder (2) näher an einer Schlaufeninnenseite (7) als an einer Schlaufenaußenseite (8) angeordnet sind, wobei die Glieder (2) jeweils zwei einander gegenüberliegende Seitenlaschen (9) aufweisen, wobei Seitenlaschen (9) benachbarter Glieder (2) an der Schlaufeninnenseite (7) wenigstens eine Lauffläche (10) bilden, wobei zumindest ein Teil der Glieder (2) eine jeweilige aus der Lauffläche (10) herausragende Rolle (11) aufweist, wobei das Obertrum (3) und das Untertrum (4) über die Lauffläche (10) derart aneinander anliegen können, dass das Obertrum (3) und das Untertrum (4) mittels der Rollen (11) relativ zueinander verfahrbar sind,
wobei die Lauffläche (10) an zumindest einem Teil der Übergänge zwischen benachbarten Gliedern (2) derart unterbrochen ist, dass ein durch ein erstes der beiden benachbarten Glieder (2) gebildeter Teil der Lauffläche (10) eine Ausnehmung (12) aufweist, und dass ein durch ein zweites der beiden benachbarten Glieder (2) gebildeter Teil der Lauffläche (10) einen Zapfen (13) aufweist, der unter Bildung eines Spalts (14) in die Ausnehmung (12) eingreift.

2. Leitungsführungseinrichtung (1) nach Anspruch 1, wobei die Rollen (11) eine jeweilige Rollfläche (15) aufweisen, welche quer zur Ausbreitungsrichtung (16) der Leitungsführungseinrichtung (1) schmaler als die Ausnehmungen (12) ist.

3. Leitungsführungseinrichtung (1) nach einem der vorstehenden Ansprüche, wobei die Ausnehmungen (12) eine jeweilige Länge (22) entlang der Ausbreitungsrichtung (16) der Leitungsführungseinrichtung (1) aufweisen, die größer als eine Spaltbreite (18) des mit der jeweiligen Ausnehmung (12) gebildeten Spalts (14) ist.

4. Leitungsführungseinrichtung (1) nach einem der vorstehenden Ansprüche, wobei die Spalte (14) zwischen Rändern (17) der Lauffläche (10) quer zur Ausbreitungsrichtung (16) der Leitungsführungseinrichtung (1) durchgehend ausgebildet sind.

5. Leitungsführungseinrichtung (1) nach einem der vorstehenden Ansprüche, wobei die Spalte (14) eine jeweilige Spaltbreite (18) aufweisen, die zwischen 2 und 20 % einer Ausdehnung (19) der Lauffläche (10) quer zur Ausbreitungsrichtung (16) der Leitungsführungseinrichtung (1) entspricht.

6. Leitungsführungseinrichtung (1) nach einem der vorstehenden Ansprüche, wobei die Zapfen (13) symmetrisch zur Ausbreitungsrichtung (16) der Leitungsführungseinrichtung (1) ausgebildet sind.

7. Leitungsführungseinrichtung (1) nach einem der vorstehenden Ansprüche, wobei die Zapfen (13) jeweils zu einer Spitze (20) zulaufend ausgebildet sind.

8. Leitungsführungseinrichtung (1) nach einem der vorstehenden Ansprüche, wobei die Lauffläche (10) zumindest an allen Übergängen zwischen zwei rollenlosen Gliedern (2) durch einen zwischen einem jeweiligen Zapfen (13) und einer jeweiligen Ausnehmung (12) ausgebildeten Spalt (14) unterbrochen ist.

9. Leitungsführungseinrichtung (1) nach einem der vorstehenden Ansprüche, wobei bei jedenfalls einem Teil der Glieder (2) die Lauffläche (10) durch eine jeweilige Mehrzahl von Vertiefungen (21) unterbrochen ist.

10. Leitungsführungseinrichtung (1) nach Anspruch 9, wobei die Vertiefungen (21) derart paarweise angeordnet sind, dass jeweils ein Paar der Vertiefungen (21) die Lauffläche (10) zwischen Rändern (17) der Lauffläche (10) quer zur Ausbreitungsrichtung (16) der Leitungsführungseinrichtung (1) durchgehend unterbricht.

## Claims

1. Line-carrying device (1) having a multiplicity of links (2) which are connected to one another in an articulated manner and which form a loop made up of an upper run (3), a deflection region (4) and a lower run (5), wherein adjacent links (2) are pivotable about a respective pivot axis (6) in relation to one another, wherein, at least for a portion of the links (2), the pivot axes (6) are arranged closer to a loop inner side (7) than a loop outer side (8), wherein the links (2) each have two mutually oppositely situated side plates (9), wherein side plates (9) of adjacent links (2) form at least one running surface (10) on the loop inner side (7), wherein at least a portion of the links (2) has a respective roller (11) which projects from the running surface (10), wherein the upper run (3) and the lower run (4) are able to bear against one another via the running surface (10) in such a way that the upper run (3) and the lower run (4) are movable relative to one another by means of the rollers (11),
wherein,
at at least a portion of the transitions between adjacent links (2), the running surface (10) is interrupted in such a way that one part of the running surface (10), which is formed by a first one of the two adjacent links (2), has a recess (12), and that one part of the running surface (10), which is formed by a second one of the two adjacent links (2), has a pin (13) which engages into the recess (12) such that a gap (14) is formed.

2. Line-carrying device (1) according to Claim 1, wherein the rollers (11) have a respective rolling surface (15) which, transverse to the travel direction (16) of the line-carrying device (1), is narrower than the recesses (12).

3. Line-carrying device (1) according to either of the preceding claims, wherein the recesses (12) have a respective length (22) along the travel direction (16) of the line-carrying device (1) that is greater than a gap width (18) of the gap (14) which is formed with the respective recess (12).

4. Line-carrying device (1) according to one of the preceding claims, wherein the gaps (14) are configured to be continuous between edges (17) of the running surface (10) transverse to the travel direction (16) of the line-carrying device (1).

5. Line-carrying device (1) according to one of the preceding claims, wherein the gaps (14) have a respective gap width (18) which corresponds to between 2 and 20% of an extent (19) of the running surface (10) transverse to the travel direction (16) of the line-carrying device (1).

6. Line-carrying device (1) according to one of the preceding claims, wherein the pins (13) are configured to be symmetrical in relation to the travel direction (16) of the line-carrying device (1).

7. Line-carrying device (1) according to one of the preceding claims, wherein the pins (13) are each formed so as to taper to a tip (20).

8. Line-carrying device (1) according to one of the preceding claims, wherein, at least at all the transitions between two roller-free links (2), the running surface (10) is interrupted by a gap (14) formed between a respective pin (13) and a respective recess (12).

9. Line-carrying device (1) according to one of the preceding claims, wherein, for at any rate a portion of the links (2), the running surface (10) is interrupted by a respective plurality of depressions (21).

10. Line-carrying device (1) according to Claim 9, wherein the depressions (21) are arranged in pairs in such a way that in each case one pair of the depressions (21) continuously interrupts the running surface (10) between edges (17) of the running surface (10) transversely to the travel direction (16) of the line-carrying device (1).

## Revendications

1. Dispositif de guidage de lignes (1) comportant une pluralité d'organes (2) reliés les uns aux autres de manière articulée, lesquels forment une boucle constituée d'un brin supérieur (3), d'une région de déviation (4) et d'un brin inférieur (5), des organes (2) adjacents pouvant pivoter l'un par rapport à l'autre autour d'un axe de pivotement (6) respectif, les axes de pivotement (6) étant disposés plus près d'un côté intérieur de boucle (7) que d'un côté extérieur de boucle (8) au moins dans une partie des organes (2), les organes (2) présentant respectivement deux languettes latérales (9) opposées l'une à l'autre, des languettes latérales (9) d'organes (2) adjacents formant au moins une surface de roulement (10) sur le côté intérieur de boucle (7), au moins une partie des organes (2) présentant un rouleau (11) respectif faisant saillie à partir de la surface de roulement (10), le brin supérieur (3) et le brin inférieur (4) pouvant s'appuyer l'un contre l'autre par le biais de la surface de roulement (10), de telle sorte que le brin supérieur (3) et le brin inférieur (4) peuvent être déplacés l'un par rapport à l'autre au moyen des rouleaux (11),
la surface de roulement (10) étant interrompue au niveau d'au moins une partie des transitions entre des organes (2) adjacents, de telle sorte qu'une partie, formée par un premier des deux organes (2) adjacents, de la surface de roulement (10) présente un évidement (12), et qu'une partie, formée par un deuxième des deux organes (2) adjacents, de la surface de roulement (10) présente un tourillon (13) qui vient en prise dans l'évidement (12) en formant une fente (14).

2. Dispositif de guidage de lignes (1) selon la revendication 1, les rouleaux (11) présentant une surface de roulement (15) respective, laquelle est plus étroite que les évidements (12) transversalement à la direction de déplacement (16) du dispositif de guidage de lignes (1).

3. Dispositif de guidage de lignes (1) selon l'une des revendications précédentes, les évidements (12) présentant une longueur (22) respective le long de la direction de déplacement (16) du dispositif de guidage de lignes (1), laquelle longueur est supérieure à une largeur de fente (18) de la fente (14) formée à l'aide de l'évidement (12) respectif.

4. Dispositif de guidage de lignes (1) selon l'une des revendications précédentes, les fentes (14) entre des bords (17) de la surface de roulement (10) transversalement à la direction de déplacement (16) du dispositif de guidage de lignes (1) étant réalisées de manière continue.

5. Dispositif de guidage de lignes (1) selon l'une des revendications précédentes, les fentes (14) présentant une largeur de fente (18) respective qui correspond à entre 2 et 20 % d'une étendue (19) de la surface de roulement (10) transversalement à la direction de déplacement (16) du dispositif de guidage de lignes (1).

6. Dispositif de guidage de lignes (1) selon l'une des revendications précédentes, les tourillons (13) étant réalisés de manière symétrique par rapport à la direction de déplacement (16) du dispositif de guidage de lignes (1).

7. Dispositif de guidage de lignes (1) selon l'une des revendications précédentes, les tourillons (13) étant réalisés respectivement de manière à se terminer en une pointe (20).

8. Dispositif de guidage de lignes (1) selon l'une des revendications précédentes, la surface de roulement (10) étant interrompue au moins au niveau de toutes les transitions entre deux organes (2) sans rouleaux par une fente (14) formée entre un tourillon (13) respectif et un évidement (12) respectif.

9. Dispositif de guidage de lignes (1) selon l'une des revendications précédentes, la surface de roulement (10) étant interrompue par une pluralité respective de renfoncements (21) pour au moins une partie des organes (2).

10. Dispositif de guidage de lignes (1) selon la revendication 9, les renfoncements (21) étant disposés par paires de telle sorte que respectivement une paire de renfoncements (21) interrompt de manière continue la surface de roulement (10) entre des bords (17) de la surface de roulement (10) transversalement à la direction de déplacement (16) du dispositif de guidage de lignes (1).
